# EUROPEAN PATENT APPLICATION

(11) **EP 4 756 215 A1**
(43) Date of publication of application: **10.06.2026**
(21) Application number: 24383335.7
(22) Date of filing: 06.12.2024
(51) Int. Cl.: F03D 7/02, F03D 80/40

(54) **METHOD OF CONTROLLING A WIND TURBINE**

(71) Applicant: Siemens Gamesa Renewable Energy Innovation & Technology S.L., 31621 Sarriguren (Navarra) (ES)
(72) Inventor: Saenz Aguirre, Aitor, 20560 Oñati (ES); Jensen, Dennis Stachniuk, 7330 Brande (DK); Egedal, Per, 7400 Herning (DK)
(74) Representative: SGRE-Association

(57) **Abstract**

The invention describes a method of controlling a wind turbine (2), which method comprises deducing the presence of ice accretion (3) on the rotor blades (20); and subsequently, in a first stage (S1), effecting an increase in rotor speed (ω) by adjusting a power reference (Pref) of the wind turbine (2); and subsequently, in a second stage (S2), continually adjusting the rotor blade pitch angle (β) on the basis of the observed output power (P_{obs}) to maximise the output power (P_{obs}). The invention further describes a wind turbine (2) comprising a means of observing the output power (P_{obs}) of the wind turbine (2); and a wind turbine controller (22) adapted to apply the claimed method.

## Description

### Background

During normal operation of a variable-speed wind turbine, a controller may issue power output references and rotor blade pitch references in order to optimize the aerodynamic performance of the wind turbine. The references may be computed with the aim of optimizing rotor speed (i.e. the rotational speed of the aerodynamic rotor) for any wind speed up to the wind turbine's rated operation. For any wind speed value below the rated wind speed, a suitable combination of rotor speed and rotor blade pitch angle will ensure optimal aerodynamic performance. The set of rotor speeds and the set of pitch angles for each wind speed are referred to as the "speed trajectory" and the "pitch trajectory" respectively.

Various factors determine the aerodynamic behaviour of a rotor blade airfoil. Wind speed, rotor speed and rotor blade pitch angle determine the angle of attack and lift and drag coefficients along its airfoil. The angle of attack can be increased up to a critical value, beyond which the rotor blade would stall. The maximum lift coefficient is therefore determined to a large extent by the critical angle of attack. During normal operation of a wind turbine, a suitable combination of rotor speed and pitch angle optimizes the aerodynamic performance of the rotor blades in order to maximize the wind turbine's power output.

In certain circumstances, the predefined optimal speed and pitch trajectories may no longer apply. For example, in unfavourable weather conditions, ice can accumulate on the rotor blades. The ice accretions change the aerodynamic properties of the rotor blades so that the relationship between angle of attack and lift coefficient no longer applies. For example, the critical angle of attack is significantly smaller, and the maximum achievable lift coefficient is therefore also decreased. It is important for a wind turbine to take these aspects into account, because an excessively large angle of attack of an iced rotor can cause the rotor blades to stall, resulting in shutdown of the wind turbine and loss of power output.

To avoid loss of earnings resulting from shutdown caused by ice accretions on the rotor blades, the rotor blades of prior art wind turbines may be equipped with anti-icing systems such as heating mats which can be activated in cold operating conditions. Alternatively or in addition, a wind turbine can be equipped with sensors that deliver information which can be analysed to deduce the presence of ice on the rotor blades. For example, temperature and humidity sensors can be arranged at suitable locations on the rotor blades; motion sensors can be used to detect alterations in characteristic frequencies, etc. However, such systems add significantly to the overall cost of energy, and may not be able to completely prevent ice-build up so that even a wind turbine equipped with such systems may stall during unfavourable weather conditions.

In cold climate conditions, i.e. conditions in which ice build-up can frequently occur on the rotor blades of an operating wind turbine, the wind speed sensors of a wind turbine are often also affected by ice accretion and can deliver inaccurate and therefore misleading data. Any prior art approach that uses wind speed data to control a wind turbine with iced rotor blades can suffer from inaccuracy, resulting in loss of rotor speed towards stall, and subsequent shutdown and loss of earnings.

It is therefore an object of the invention to provide an improved way of dealing with ice accretions on wind turbine rotor blades.

This object is achieved by the claimed method of controlling a wind turbine and by the claimed wind turbine.

### Description

In the context of the invention, it shall be understood that the wind turbine is a variable-speed wind turbine (direct-drive or geared) with pitchable rotor blades, and that the wind turbine comprises various controllers, including at least a power controller that issues a power reference relating to the generator, and a pitch controller that issues a collective pitch reference relating to the rotor blades. As used herein, a "reference" can be signals or commands that are issued to achieve a desired outcome: a pitch reference can be an increment or decrement issued to a pitch actuator, for example; a power reference can be an output power increment or decrement, a torque increment or decrement, etc. Such references can be updated at regular intervals or as necessary, as will be known to the skilled person.

The expression "normal operation" of a wind turbine shall be understood as operation according to the wind turbine's predefined optimal speed and pitch trajectories, which are chosen on the basis of factors such as weather conditions as explained above.

The build-up of ice on a wind turbine rotor blade is referred to in the following as "ice accretions" or simply "ice build-up". A rotor blade affected in this way can be referred to herein simply as an "iced rotor blade".

In the context of the invention, it may be assumed that, during operation of the wind turbine, various operational parameters are continually observed using known monitoring means. Specifically, it shall be understood that the quantity of electrical power being generated - i.e. the wind turbine's output power - is continually monitored, and a measurement of the observed output power is available at all times to the wind turbine controller.

The claimed method of controlling a wind turbine commences with a step of deducing the presence of ice accretion on the rotor blades. Since ice build-up on the rotor blades invariably has a detrimental affect on their aerodynamic properties, ice build-up can for example be deduced from an unexpected reduction in output power, an unexpected reduction in rotor speed, etc.

Subsequently, in a first stage, the claimed method comprises a step of effecting an increase in rotor speed by reducing the wind turbine's power reference. Operating the wind turbine to output less power has the effect of allowing the aerodynamic rotor to turn more quickly, and this action has the effect of reducing the angle of attack of the rotor blades. This corrective measure as applied in the first stage of the inventive method is performed to prevent the rotor speed from decreasing to its stall speed. Subsequently, in a second stage, the claimed method comprises continually adjusting the rotor blade pitch angle exclusively on the basis of the observed output power, with the aim of maximising the output power.

In the inventive approach, the output power of the wind turbine is optimized only on the basis of the observed output power. An advantage of the inventive method is that it is completely independent of wind speed, i.e. wind speed measurements are of no relevance to the inventive method and are not required. The inventive method is therefore particularly suited for use in wind turbines installed at locations with cold climate conditions, since the claimed method does not need any wind speed data and therefore does not suffer from inaccuracy due to erroneous data from an iced wind speed sensor. The inventive approach is therefore reliable and avoids unnecessary shutdown of a wind turbine with iced rotor blades.

The inventive approach is a two-stage approach to dealing with iced rotor blades. In the first stage, the speed trajectory of the wind turbine is modified by reducing the power reference. As explained above, reducing the power reference results in an increase in rotor speed, which in turn reduces the angle of attack of the rotor blades. In the second stage, an active pitch optimization process is carried out to continually and dynamically optimize the angle of attack of the iced rotor blades. At some point in time, the ice accretions on the rotor blades will melt, and the wind turbine can resume normal operation.

The claimed wind turbine comprises a means of observing or measuring its output power, and a wind turbine controller adapted to carry out the steps of the inventive method.

An advantage of the inventive wind turbine is that it can be installed at a location with frequent cold climate conditions, since its wind turbine controller will ensure that it can continue to generate output power even in the presence of ice accretions on the rotor blades, avoiding loss of earnings from unintended shutdown events.

Particularly advantageous embodiments and features of the invention are given by the dependent claims, as revealed in the following description. Features of different claim categories may be combined as appropriate to give further embodiments not described herein.

The expressions "monitored output power" and "observed output power" shall be understood to be synonyms referring to the quantity of electrical power being generated by the wind turbine at the time of measurement, and may be used interchangeably herein. The active pitch optimization process may also be referred to herein as an optimization algorithm or search algorithm.

As used in the context of a wind turbine rotor blade, the term "feather" refers to a pitch angle in which the chord plane of the rotor blade is essentially parallel to the wind direction. Similarly, the term "fine" refers to a pitch angle in which the chord plane of the rotor blade is essentially perpendicular to the wind direction.

Each specific combination of rotor blade pitch angle, rotor speed and wind speed determines the rotor blade airfoil's angle of attack. A relationship between angle of attack and lift coefficient for a rotor blade airfoil (between root end and tip) is established during a design stage. This relationship is determined on the assumption of normal operating conditions, i.e. in any operating condition that does not result in ice accretions on the rotor blade. However, if ice builds up on the rotor blade, the layers of ice continually alter the shape of the rotor blade airfoil, and the relationship between angle of attack and lift coefficient no longer applies.

In a preferred embodiment of the invention, the presence of ice accretion is deduced on the basis of a decrease in the observed output power. As ice builds up on a rotor blade, altering the shape of its airfoil, the angle of attack and lift coefficient associated with that specific combination of pitch angle, rotor speed and wind speed no longer applies. As a result, the pitch angle associated with an optimal lift coefficient during normal operating conditions can, at the same wind speed, be associated with a loss in lift and aerodynamic stall. The rotor therefore loses speed, and the output power decreases accordingly. Alternatively or in addition, the presence of ice accretion may be deduced on the basis of an observed decrease in rotor speed.

The airfoil of a "clean" or non-iced rotor blade can be characterized by a plot of lift coefficient against angle of attack. As the angle of attack increases (depending on pitch angle, rotor speed and wind speed), the lift coefficient increases and eventually reaches a maximum. Generally, the objective of the wind turbine controller is to ensure that the rotor blades are pitched to achieve this maximum lift coefficient, ensuring that as much energy as possible is being extracted from the wind. Under normal operating conditions, the wind turbine controller takes care not to move beyond this maximum, since the lift coefficient decreases thereafter. However, as ice accumulates on the rotor blades, the airfoil shape changes, and the previous combination of pitch angle, rotor speed and wind speed are now associated with a lift coefficient that is past its maximum, i.e. a significantly lower lift coefficient. This causes the rotor to slow down, resulting in a drop in output power and increasing the likelihood of aerodynamic stall.

As explained above, in the first stage, the power reference is decreased to effect an increase in rotor speed with the aim of lowering the angle of attack and increasing the lift coefficient of the altered (but unknown) airfoil shape of the iced rotor blade. The amount by which the power reference is reduced can be determined in advance, for example during the design stage of that wind turbine.

In a particularly preferred embodiment of the invention, the first stage further comprises a step of pitching the rotor blades towards feather. This is done by increasing the pitch angle. To this end, the wind turbine controller instructs the pitch controller to increase the pitch angle by a predetermined amount. The amount by which the pitch reference is increased can be determined in advance, for example during the design stage of that wind turbine. After increasing the rotor blade pitch angle and the rotor speed in this way, the wind turbine continues to operate for a predetermined duration, for example several minutes, or until operation has stabilized at a new operating point.

In the subsequent second stage, the output power is maximized by adjusting the rotor blade pitch angle exclusively on the basis of the observed output power. Preferably, this is done in an optimization phase during which an optimal pitch angle is identified.

In a preferred embodiment of the invention, the optimization phase comprises a step of adjusting the rotor blade pitch angle by a positive pitch offset in response to an observed change in output power. For example, the iced rotor blade is pitched further towards feather if the output power is observed to increase in response to a previous adjustment.

In a further preferred embodiment of the invention, the optimization phase comprises a step of adjusting the rotor blade pitch angle by a negative pitch offset in response to an observed change in output power. For example, the iced rotor blade is pitched towards fine if the output power is observed to decrease in response to the previous adjustment.

Preferably, the wind turbine controller iteratively optimizes the power reference and the pitch reference while observing the output power. After identifying an output power maximum, the wind turbine operation stabilizes at the new operating point in a "steady-state phase" or "wait phase". This continues for a predetermined duration, after which the optimization procedure commences again.

At this stage, a pitch offset can be quite small, for example in the range of 0.1° to 3° over a suitable range, for example 0° - 30°. Since the offset size and angular range will depend on various factors such as rotor blade length, rotor blade geometry, operating conditions etc., these parameters are preferably determined in a suitable tuning procedure.

Each step of adjusting the rotor blade pitch angle is followed by an evaluation step during which the output power is observed for a predetermined duration. Optimization of the pitch angle of the iced rotor blades is an iterative process, with the single goal of maximizing the output power under the prevalent unfavourable conditions. The iterative process observes the effect of each pitch offset on the output power, and chooses the next pitch offset accordingly. At some stage, the output power will have reached the achievable maximum for those conditions. Subsequently, the optimization phase can be followed by a steady-state phase during which the wind turbine operates at the optimal pitch angle identified for the iced rotor blades. As indicated above, a steady-state phase shall be understood as a phase in which the operating conditions remain essentially stable (e.g. essentially no change occurs in ice build-up), i.e. a phase in which the search algorithm returns convergent results.

During a wait phase or a steady-state phase, while the wind turbine is operating at the previously identified optimum settings, weather conditions may deteriorate and the rotor blade ice accretions can become larger. Particularly at low rotor speeds, such developments can result in rotor stall. Therefore, in a preferred embodiment of the invention, the search algorithm is periodically restarted. As soon as the iterative phase starts again, it will quickly identify the new optimum pitch reference.

At some stage, the ice accretions will start to melt, and the rotor blade airfoil shape will gradually assume a shape with improved aerodynamic performance. As a result, the previously identified pitch angle no longer achieves the previous lift coefficient, i.e. the "improving" airfoil shape behaves more poorly, and this is deduced from an observed drop in output power. Therefore, in a particularly preferred embodiment of the invention, a steady-state phase is followed by a further optimization phase in response to an observed decrease in output power. In this case, the rotor blade pitch angles are iteratively adjusted towards "fine".

Of course, instead of improving, the weather conditions may deteriorate so that ice again builds up on the rotor blades. Using the inventive approach, the optimization and steady-state phases can alternate indefinitely and the wind turbine controller can act as appropriate, pitching the rotor blades to prevent stall and to achieve the highest possible output power under the prevalent conditions.

Ultimately, the ice accretions will melt from the rotor blades, allowing the wind turbine controller to resume control using the speed and pitch trajectories for normal operation, in which the observed output power can once again reach its optimal value for normal weather conditions.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary wind turbine, showing ice accretion on its rotor blades;
Figure 2 illustrates the relationship between lift coefficient and angle of attack for a rotor blade airfoil;
Figure 3 shows a speed trajectory for the wind turbine of Figure 1;
Figure 4 shows a pitch trajectory for the wind turbine of Figure 1;
Figure 5 illustrates control of a wind turbine using the inventive method;
Figure 6 illustrates control of a wind turbine using a prior art method;
Figure 7 shows a block diagram of a wind turbine controller configured to perform the inventive method;
Figure 8 is an exemplary flowchart of the inventive method.

In the diagrams, like numbers refer to like objects throughout. Objects in the diagrams are not necessarily drawn to scale.

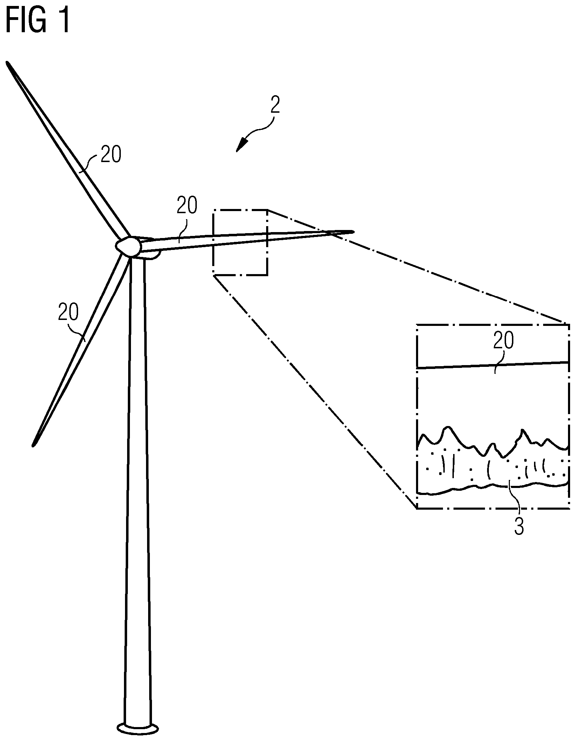

Figure 1 shows a wind turbine 2 with the usual aerodynamic rotor comprising three rotor blades 20 mounted to a hub. The enlarged portion of the diagram shows ice accretions 3 as they might build up on the rotor blades 20 under certain unfavourable weather conditions. The effect of ice accretions on the aerodynamic properties of the rotor blade airfoils is to reduce the lift coefficient, thereby reducing the rotor speed. The rotor speed may be reduced to the extent that the rotor stalls and the wind turbine must be shut down, resulting in loss of earnings until the ice melts and the wind turbine can be re-started.

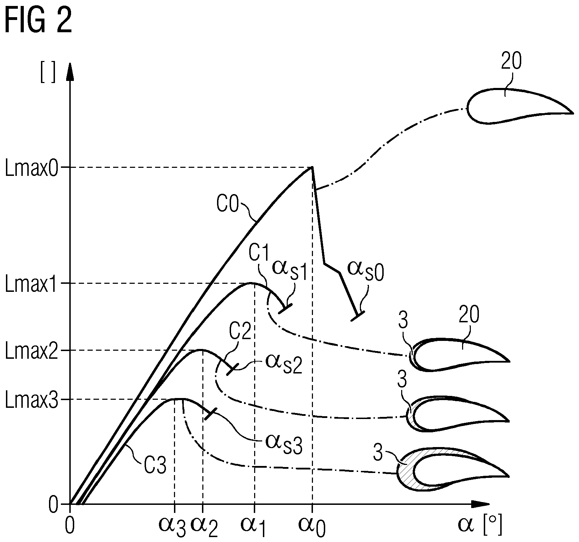

Figure 2 shows several curves C0, C1, C2, C3 indicating the relationship between lift coefficient (Y-axis) and angle of attack (X-axis) for a rotor blade. The angle of attack of an airfoil is determined by the rotor blade pitch angle, rotor speed and wind speed. Curve C0 shows the relationship for a rotor blade under normal conditions, i.e. without ice accretions 3 on its surfaces; curves C1 - C3 show several possible relationships for the same rotor blade with progressively more severe ice accretions as indicated by the associated airfoil cross-sections. As long as the airfoil is "clean", i.e. unaffected by ice build-up, the angle of attack α_{S0} at which it would stall is quite large. However, as ice builds up on the rotor blade surfaces, the stall angle α_{S1}, α_{S2}, α_{S3} becomes progressively smaller as indicated.

For the "clean" airfoil, a maximum lift coefficient Lₘₐₓ₀ is achieved at a certain angle of attack α₀, and the wind turbine controller generally ensures that the rotor blades are pitched to achieve this optimal combination. However, as ice accumulates and changes the rotor blade airfoil shape, the maximum lift coefficient Lₘₐₓ₁, Lₘₐₓ₂, Lₘₐₓ₃ of each altered airfoil shape occurs at a progressively smaller angle of attack α₁, α₂, α₃.

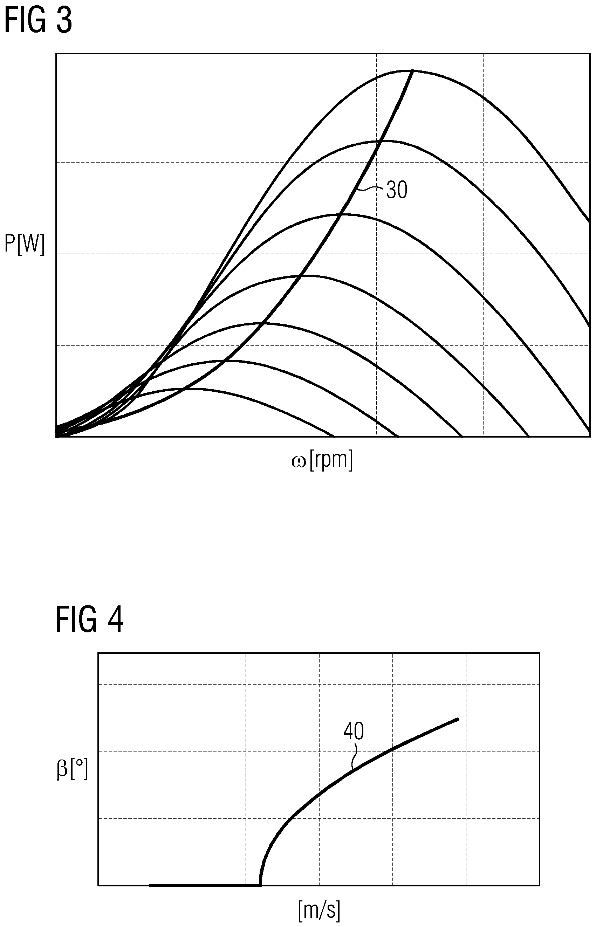

Figure 3 and Figure 4 show a speed trajectory 30 and a pitch trajectory 40 of an exemplary wind turbine, as established on the basis of favourable weather conditions, for wind speeds up to the rated wind speed of that wind turbine. In Figure 3, the Y-axis represents output power P and the X-axis represents rotor speed ω. Each curve applies to a wind speed interval (e.g. 6 m/s, 10 m/s etc.), and the diagram also shows an exemplary optimal trajectory 30 for the rotor speed. The lowest wind speed at which the aerodynamic rotor can turn is referred to as the cut-in wind speed of that wind turbine.

The highest wind speed at which the aerodynamic rotor can safely turn is referred to as the cut-out wind speed of that wind turbine. Figure 4 illustrates the relationship between pitch angle β (Y-axis) and wind speed (X-axis), i.e. the predetermined pitch trajectory 30 for that exemplary wind turbine. At low wind speeds near the cut-in wind speed, the pitch angle is 0°, i.e. the rotor blades are pitched "at fine" so that the aerodynamic rotor can capture as much energy as possible from the wind. As wind speed increases, the pitch angle is increased towards feather. At very high wind speeds, the rotor blades can be "feathered" by increasing the pitch angle towards 90° in order to prevent damage from excessive loading. During normal operation, the wind turbine the controller uses such speed and pitch angle trajectories 30, 40 to identify the optimal pitch angle and the achievable output power, and issues references accordingly.

In weather conditions that lead to iced rotor blades, the altered aerodynamic properties of the rotor blade airfoils can lead to a situation in which, even though the wind turbine controller selects the optimum pitch angle for the current wind speed, the rotor speed decreases towards its minimum speed. If the aerodynamic rotor slows too much, it may stall and the wind turbine controller may respond by initiating shut down.

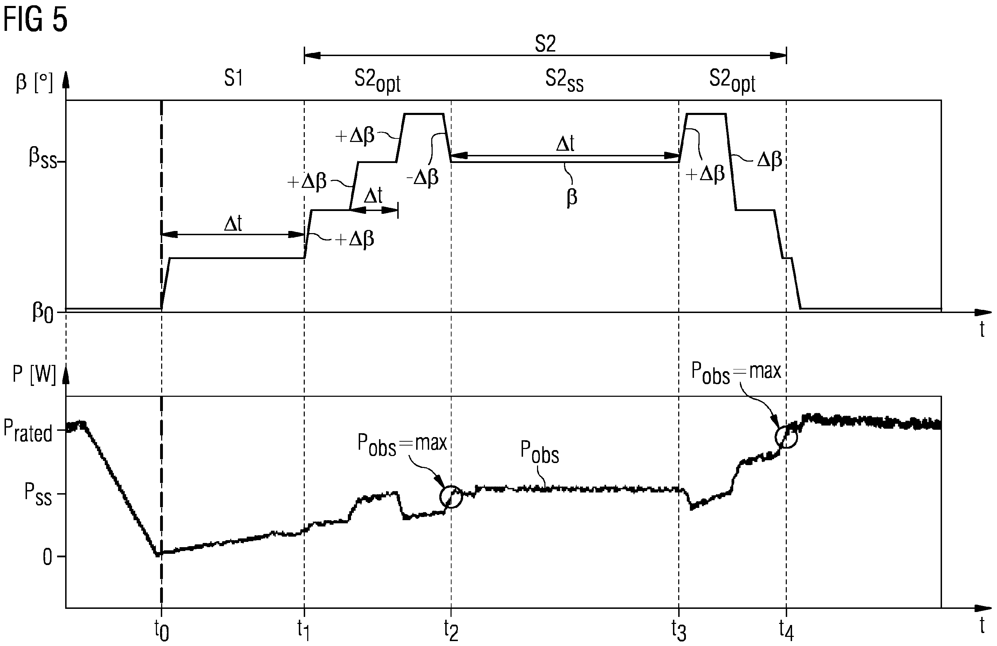

Figure 5 illustrates the inventive approach. The diagram shows a collective pitch reference and output power for an exemplary wind turbine that applies the inventive method. At the left-hand side, following an interval of normal operation at the wind turbine rated levels using a pitch angle β₀ suitable for the current wind speed, weather conditions deteriorate (the wind speed may be assumed to remain essentially constant) and the output power starts to decrease. The drop in the observed output power P_{obs} is interpreted by the wind turbine controller at time t₀ as being caused by a reduction in rotor speed ω towards its minimum speed owing to ice accretions on the rotor blades.

In response, the wind turbine controller issues a reduced power reference. Reducing the output power has the effect of allowing the aerodynamic rotor to rotate faster, thereby avoiding a stall situation. In this exemplary embodiment, the pitch controller also pitches the rotor blades towards feather by adding a pitch offset Δβ to the collective pitch angle. This is done to increase the lift coefficient of the iced rotor blades from an unfavourably low value back towards a maximum, for example the maximum of an exemplary curve C1 - C3 of Figure 2. These measures have the effect of keeping the aerodynamic rotor turning and continuing to generate output power. The invention is based on the insight that, when ice accumulates on a rotor blade, the relationship between angle of attack and lift coefficient is changed, and the same pitch angle results in a lift coefficient that is past its maximum. The inventors have realised that the response described above can prevent stall and keep the rotor turning, allowing continued operation of the wind turbine even if significant ice accretions have built up on the rotor blades.

After a "settling time" of the new speed trajectory in this first stage S1, a second stage S2 commences with an optimization process S2ₒₚₜ commences at time t₁. In this optimization process S2ₒₚₜ, the pitch trajectory is adapted by determining an optimal pitch angle for the current conditions. Since the extent of ice accretion and its effect on the rotor blade aerodynamic properties are essentially unknown, the pitch trajectory can comprise a series of iterative corrections. Here, an observed increase in output power is followed by a step of adding a pitch offset Δβ to the current pitch reference, and an observed decrease in output power is followed by a step of subtracting a pitch offset Δβ from the current pitch reference. Equally, if a negative pitch offset -Δβ is followed by an increase in output power, another negative pitch offset -Δβ can be subtracted from the pitch reference; if the output power does not increase as a result, a positive pitch offset +Δβ can be applied to "correct" for the previous ineffective adjustment.

Each step of adding or subtracting a pitch offset Δβ is followed by an evaluation duration during which the output power P_{obs} is observed, until a suitable pitch angle β_{SS} (i.e. the initial pitch angle β₀ modified by iteratively adding/subtracting pitch offsets as described above) has been identified for the iced rotor blade. The proposed optimization algorithm iteratively seeks the optimal pitch offset in view of the output power P_{obs}.

In the example shown here, a first pitch step +Δβ towards feather is performed and its effect on the output power P_{obs} is observed. Since its effect on output power P_{obs} is positive, a second pitch step +Δβ towards feather is performed. Again, its effect on power output is positive. A third pitch step +Δβ towards feather is performed, but its effect on the output power P_{obs} is negative, so that a pitch step -Δβ towards fine is performed to counteract the effect of the previous step. After identifying the most favourable pitch angle β_{SS}, the wind turbine continues to operate in a steady-state mode S2_{SS}, delivering an essentially steady output power P_{SS} as illustrated in this exemplary diagram.

The ice accretions can change during mode S2_{SS}, for example ice accretions can build up further, or can start to melt. Therefore, the optimization and steady-state modes S2ₒₚₜ, S2_{SS} can alternate indefinitely to continually optimize the pitch angle according to the changing conditions.

In the example given here, ice starts to melt from the rotor blades at time t3, so that the previously chosen pitch angle is no longer ideal, and the rotor speed ω decreases, resulting in a drop in output power. This triggers another optimization mode S2ₒₚₜ to progressively correct the pitch angle.

At some stage as indicated at time t₄, the ice will have melted from the rotor blades. The return to normal operation at time t₅ is deduced by the wind turbine controller when the wind turbine is once again operating at standard settings (its normal speed and pitch trajectories), and a correction is no longer needed.

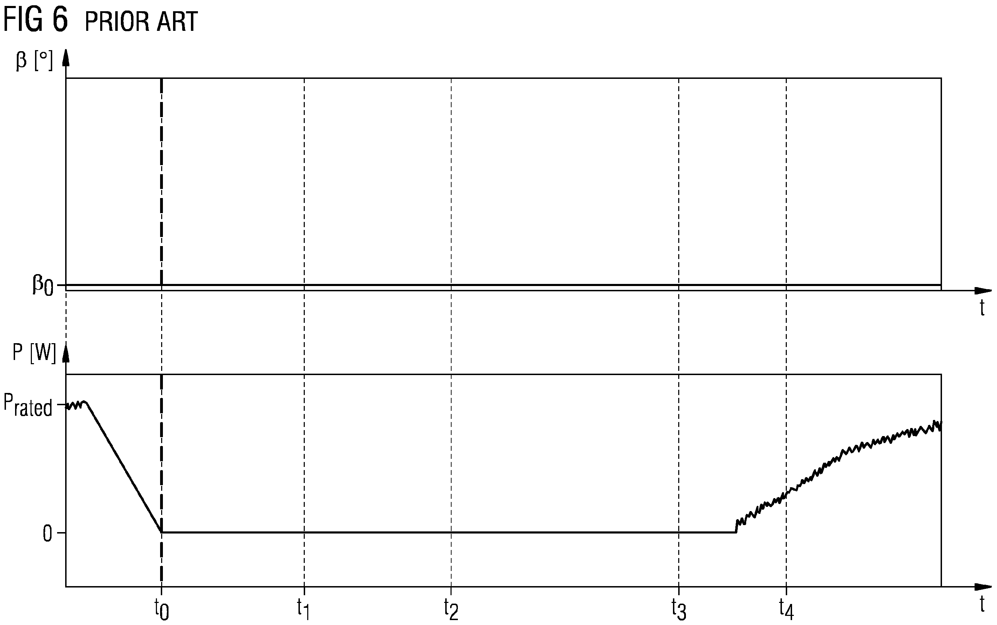

Figure 6 illustrates the result of controlling a wind turbine using a prior art approach. The diagram shows an output power curve P_{obs}. At the left-hand side, the output power P_{obs} is decreasing as the rotor loses speed owing to ice accretions on the rotor blades as explained in Figure 5 above. Because the ice accretions alter the aerodynamic behaviour of the rotor blades, specifically altering the relationship between angle of attack and lift coefficient, the rotor will eventually stall as shown here near time t₀. The wind turbine is shut down, and this state persists until the ice has melted from the rotor blades at time t₄, at which time the wind turbine can commence operating again. During the interval from shutdown until time t₄, the wind turbine is not generating any revenue.

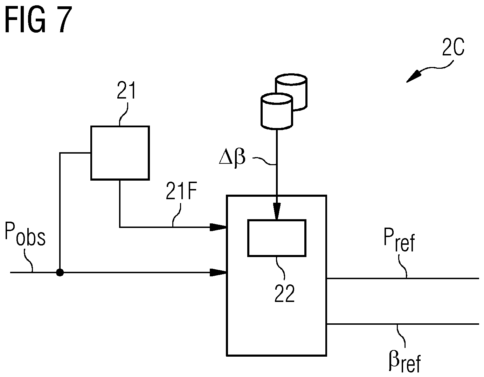

Figure 7 shows a block diagram of a wind turbine controller 2C configured to perform the inventive method. The wind turbine controller 2C is generally configured to issue commands or references to further control elements such as a rotor blade pitch controller, a power controller, etc. Here, The diagram only shows modules of relevance to the invention. During operation, in addition to measurements such as wind speed, wind direction and rotor speed ω, the wind turbine controller 2C receives measurements of the observed output power Pobs.

Here, the wind turbine controller 2C comprises a module 21 configured to deduce the presence of ice accretion 3 on the rotor blades 20 on the basis of the observed output power Pobs. When an iced rotor blade state is deduced, a suitable signal is output, for example a flag 21F that is set when an iced state is deduced.

In response to a set flag 21F, the wind turbine controller 2C effects an increase in rotor speed ω by reducing the power reference P_{ref}. This first stage response can be augmented by issuing a pitch reference β_{ref} that increases the rotor blade pitch angle ("pitching towards feather").

For the second stage of the inventive method, an optimization algorithm 22 (shown as part of a higher-order control algorithm of the wind turbine controller 2C) then seeks an optimum combination of references P_{ref}, β_{ref} on the basis of the observed output power P_{obs}. The aim of the search algorithm 22 is to maximise the output power P_{obs}. During an iterative step, the pitch reference β_{ref} can be adjusted as explained above by positive or negative pitch offsets Δβ, which can be determined in a prior tuning or design stage as explained above, and stored in a memory of the wind turbine controller 2C.

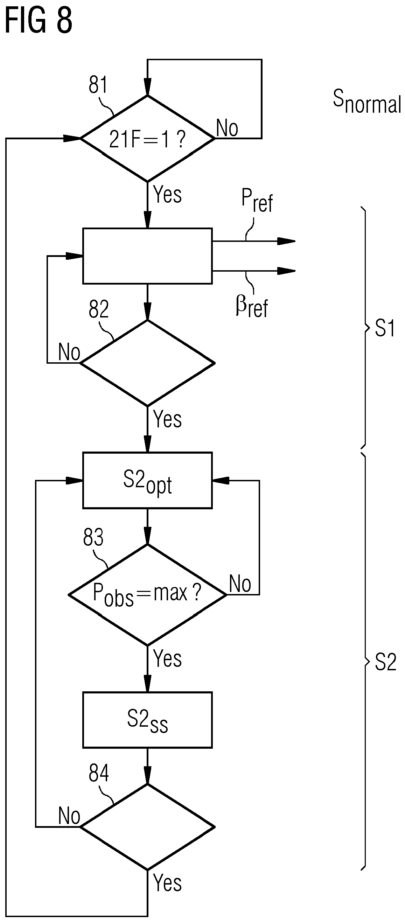

Figure 8 is a flowchart to illustrate an exemplary embodiment of the invention. Initially, the wind turbine is operating in a normal mode Sₙₒᵣₘₐₗ, i.e. under the assumption of normal weather conditions and the absence of ice accretions, working from the wind turbine's speed and pitch trajectories 30, 40 as explained above. During this normal mode Sₙₒᵣₘₐₗ, the ice-detection module 3 of the wind turbine controller 25 continually monitors the observed output power P_{obs} as represented here by query 81. If ice accretions are deduced, the flag 21F is set, control moves to the first stage S1 of the inventive method, and the wind turbine controller 2C issues a reduced power reference β_{ref} to effect an increase in rotor speed ω. The wind turbine controller 2C may also issue an increased pitch reference β_{ref}. The reduced power reference β_{ref} (and optionally the increased pitch reference) ensures that the rotor speed does not reduce to a stall speed, and that the wind turbine continues to generate output power.

At some point, for example after a predefined duration has elapsed as represented here by query 82, control moves to the second stage S2 of the inventive method, in which the search algorithm 22 iteratively seeks the optimum pitch angle β_{SS} that will maximize the output power even though the rotor blades are iced. This search for the maximum achievable output power P_{SS} is represented here by query 83. In this second stage S2, as explained above, an optimization stage is followed by steady-state operation, and these can repeat indefinitely.

Ultimately, the ice accretions will melt from the rotor blades. This can be detected by evaluating suitable operating parameters as represented here by query 84, and the wind turbine returns to operating in the normal mode Snormal.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A method of controlling a wind turbine (2), which method comprises
- deducing the presence of ice accretion (3) on the rotor blades (20);
and subsequently,
- in a first stage (S1), effecting an increase in rotor speed (ω) by adjusting a power reference (P_{ref}) of the wind turbine (2);
and subsequently,
- in a second stage (S2), continually adjusting the rotor blade pitch angle (β) on the basis of the observed output power (P_{obs}) to maximise the output power.

2. A method according to the preceding claim, wherein the presence of ice accretion (3) is deduced on the basis of a decrease in the observed output power (P_{obs}).

3. A method according to any of the preceding claims, wherein the first stage (S1) further comprises a step of pitching the rotor blades (20) towards feather.

4. A method according to any of the preceding claims, wherein the first stage (S1) persists for a predetermined duration.

5. A method according to any of the preceding claims, wherein the second stage (S2) comprises an optimization phase (S2ₒₚₜ) during which an optimal pitch angle (β_{SS}) is identified.

6. A method according to claim 5, wherein the optimization phase (S2ₒₚₜ) comprises a step of adjusting the rotor blade pitch angle (β) by a positive pitch offset (+Δβ) in response to an observed change in output power (P_{obs}).

7. A method according to claim 5, wherein the optimization phase (S2ₒₚₜ) comprises a step of adjusting the rotor blade pitch angle (β) by a negative pitch offset (-Δβ) in response to an observed change in output power (P_{obs}).

8. A method according to any of claims 5 to 7, comprising a prior tuning procedure to determine a pitch offset size (Δβ).

9. A method according to any of claims 5 to 8, wherein a step of adjusting the rotor blade pitch angle (β) is followed by an evaluation step during which the output power (P_{obs}) is observed for a predetermined duration (Δt).

10. A method according to any of claims 5 to 9, wherein an optimization phase (S2ₒₚₜ) is followed by a steady-state phase (S2_{SS}) during which the wind turbine (2) operates at the identified optimal pitch angle (β_{SS}).

11. A method according to the preceding claim, wherein a steady-state phase (S2_{SS}) is followed by a further optimization phase (S2ₒₚₜ).

12. A wind turbine (2) comprising
- a means of observing the output power (P_{obs}) of the wind turbine (2); and
- a wind turbine controller (22) adapted to apply the method according to any of claims 1 to 11.

13. A wind turbine according to the preceding claim, wherein the wind turbine controller (2C) comprises a module (21) configured to deduce the presence of ice accretion (3) on the rotor blades (20) on the basis of the observed output power (P_{obs}).

14. A wind turbine according to claim 12 or claim 13, wherein the wind turbine controller (2C) is adapted to implement an optimization algorithm (22) configured to seek an optimal pitch angle (β_{SS}) on the basis of the observed output power (P_{obs}).

15. A computer program product comprising a computer program that is directly loadable into a memory of a wind turbine controller (22) of a wind turbine (2) according to claim 12 to 14, and which comprises program elements for performing steps of the method according to any of claims 1 to 11 when the computer program is executed by the wind turbine controller (22).
